# EUROPÄISCHE PATENTSCHRIFT

(11) **EP 2 192 085 B1**
(45) Veröffentlichungstag und Bekanntmachung des Hinweises auf die Patenterteilung: **27.05.2015**
(21) Anmeldenummer: 09013185.5
(22) Anmeldetag: 20.10.2009
(51) Int. Cl.: C01B 33/02, B01J 19/24

(54) **Verfahren zum Entfernen von feinteiligem Siliziummaterial aus einem Silizium-Mahlgut sowie einer Verwendung einer Einrichtung zur Durchführung des Verfahrens**
Method for removing fine silicon material from a silicon grist and use of a device for carrying out the method
Procédé de suppression de matériau de silicium à particules fines à partir d'une matière broyée de silicium et l'utilisation d'un dispositif d'exécution du procédé

(30) Priorität: 04.11.2008 DE 102008055833
(43) Veröffentlichungstag der Anmeldung: 02.06.2010
(73) Patentinhaber: Adensis GmbH, 01129 Dresden (DE)
(72) Erfinder: Acker, Jörg, Prof. Dr., 01157 Dresden (DE); Rietig, Anja, 01993 Schipkau (DE); Meinel, Birgit, Dipl.-Chem., 01968 Brieske (DE)
(74) Vertreter: FDST Patentanwälte

(56) Entgegenhaltungen:
- EP-A1- 1 942 077
- US-A- 4 793 947
- US-A- 5 208 001

## Beschreibung

Die Erfindung betrifft ein Verfahren zum Entfernen von feintelligem Siliziummaterial, insbesondere mit Korngrößen kleiner als 1 µm, aus einem Silizium-Mahlgut mit Korngrößen kleiner als 500 µm. Sie betrifft weiterhin die Verwendung einer Einrichtung zum Entfernen von feinteiligem Siliziummaterial aus einem Silizium-Mahlgut mit Korngrößen kleiner als 500 µm zur Durchführung des Verfahrens.

Zerkleinerungsprozesse führen unabhängig von der Art des Energieeintrages und unabhängig von der technischen und apparativen Umsetzung prinzipiell zu einem Mahlgut mit inhomogener Korngrößenverteilung. Feinkomanteile stellen nicht nur einen Verlust an Mahlgut dar; sie können auch schwerwiegende Konsequenzen für die Gestaltung eines jeden technischen Prozesses haben. So können sich feinkörnige Fraktionen im Inneren von Armaturen (z. B. von Ventilen, Hähnen, Pumpen, usw.) ansammeln und so zu deren Funktionsbeeinträchtlgung oder Ausfall führen. Ebenso können feintellige Partikel zum schnellen Verstopfen von Filtern und Sieben führten.

Nicht auszuschließen ist weiterhin, dass feinteilige Materialien in Form von Stäuben eine gesundheitliche Beeinträchtigung darstellen und möglicherweise zur Explosion neigen. Hierzu zählt auch Silizium, das in feinteiliger Form sehr reaktiv ist.

Zerkleinerungsprozesse können zur erheblichen Verunreinigung des Mahlgutes führen. Ursache hierfür ist der mechanische Abrieb, der infolge des Prozesses an dem Material der verwendeten Apparatur, wie z. B. von Kugelmühle oder Brecher, auftritt. Erwartungsgemäß ist der Abrieb umso höher, Je länger die Mahldauer und je härter das zu mahlende Material ist.

Für die Zerkleinerung von Silizium sind besonders die kleinen Korngrößen (kleiner als 10 µm) und kleinsten Fraktionen (Korngrößen im Bereich kleiner als 0,26 µm) unerwünscht, von denen letztere an einer braunen Färbung zu erkennen sind. Diese sind nicht mehr mit Hilfe von Trockensiebverfahren abtrennbar; sie stellen auch für andere Abtrennverfahren eine große Herausforderung dar.

Man hat nach den üblichen mechanischen Abtrennverfahren eine Mahlgutfraktion vorliegen, welche Material von 0 µm bis zu einer Korngröße umfasst, die als größte noch mechanisch abtrennbar (verkleinerbar) ist. Diese obere Grenze liegt je nach Verfahrensaufwand zwischen 1 und 50 µm. Bei der Anwendung von Trockensiebverfahren liegt sie vorrangig zwischen 20 und 50 µm. Liegt die gewünschte Korngrößenfraktion darunter und es soll deshalb ein weiterer Trennschnitt im Bereich kleiner 1 µm durchgeführt werden, um aus o. g. Gründen den Feinstantell abzutrennen, so stellt dies ein großes Problem dar.

Aufgabe der Erfindung ist es demnach, ein Verfahren anzugeben, mit dem sich aus einem Silizium-Mahlgut mit Korngrößen kleiner als 500 µm das feinteilige Siliziummaterial ("feinkömige Fraktion", "Feinanteil" oder "Feinstanteil"), insbesondere solches mit Korngrößen kleiner als 1 µm, auf relativ einfache und kostengünstige Weise wirksam entfernen lässt, wobei das weniger feinteilige Siliziummaterial grobkörnige Fraktion", "Grobanteil") für die weitere Verwendung bereitstehen soll, und wobei am weniger feinteiligen Siliziummaterial relativ wenige Verluste entstehen sollen.

Eine weitere Aufgabe besteht darin, die Verwendung einer Einrichtung zur Durchführung des Verfahrens anzugeben, mit dem sich feintalliges Siliziummaterial aus einem Silizium-Mahlgut mit Korngrößen kleiner 500 µm entfernen lässt; wobei diese Einrichtung zur Durchführung des erfindungsgemäßen Verfahrens geeignet sein soll.

Die genannte Aufgabe bezüglich des Verfahrens wird erfindungsgemäß dadurch gelöst,
a) dass das Silizium-Mahlgut so ausgewählt wird, dass es bei Zugabe von Wasser in der gebildeten Suspension eine überwiegend braune Farbe zeigt und somit einen erheblichen Anteil an Silizium-Material der Korngröße unterhalb von 0,25 µm enthält,
b) dass das Silizium-Mahlgut in einem Reaktionsbehälter vorgelegt wird,
c) dass dem Silizium-Mahlgut eine wässrige oder wasserenthaltende Lösung einer Base zugegeben wird, wodurch ein Ätzvorgang stattfindet, wobei ein erhebliches Aufschäumen erfolgt, und wobei die feine Fraktion mit einer Komgröße kleiner etwa 1µm chemisch entfernt wird.
d) dass die Ätzung durch die Base mittels Zugabe einer Säure oder von Wasser beendet wird, wobei durch die Neutralisierung der Base mittels der Säure ein zügiges Absetzen der gebildeten Suspension eingeleitet wird, und
e) dass nach Ende des Ätzvorganges und nach einer sich einstellenden Sedimentierung das abgesetzte relativ grobkörnige Festgut zur weiteren Verarbeitung bereitgestellt und/oder die über dem relativ grobkörnigen Festgut gebildete Lösung abgezogen wird.

Diese Lösung der Aufgabe beruht auf einer Suspendierung und chemischen Auflösung des Feinstanteils des Silizium-Mahlguts. Von ganz besonderer Bedeutung ist, dass hier keine Säure, sondern eine wässrige oder wasserenthaltende Lösung einer Base, wie insbesondere von NaOH oder KOH, verwendet wird.

Das Silizium wird oberflächlich unter Wasserstoffentwicklung angeätzt. Diese Reaktion bewirkt, dass die gesamte Suspension in Bewegung gerät und aufschäumt, wobei kontinuierlich kleine Gasbläschen entweichen. Dieser Aufschäumeffekt tritt mit großer Stärke auf, wenn insbesondere Silizium-Partikel mit Korngrößen von etwa und unter 0,25 µm vorhanden sind. Aus technischen Mahlprozessen gewonnenes Silizium-Mahlgut hat häufig Partikel, deren Korngröße zumindest bis zu 70 % unter 100 µm liegt, wovon ein erheblicher Anteil wiederum unter 0,25 µm liegt. Bei der hier bevorzugten Verwendung eines solchen Mahlguts ergibt sich also ein starker Aufschäumeffekt. Ein solches feinstkörniges Mahlgut fällt im übrigen auch bei der Bearbeitung von Silizium (in Form von einstückigen Körpern, von Blöcken ( z.B. ingots) oder von Scheiben), beispielweise beim Schneiden, Sägen, Schleifen, Bohren als Abfall an. Ein solches Mahlgut ist auch kommerziell erhältlich.

Unter dem Begriff "erhebliches Aufschäumen" wird hier eine Volumenvergrößerung von mindestens 10 % verstanden. Unter bestimmten Umständen kann diese Volumenvergrößerung auch bis 100 % betragen. Die Steighöhe der erheblich aufgeschäumten Suspension wird dabei in der Regel mindestens 1 -3 cm betragen. Die erwähnte Suspension kann mit geringem mechanischen Aufwand gerührt oder gefördert werden.

Es wurde gefunden: Auf Grund der höheren Reaktivität der kleinsten Siliziumkörner werden diese vollständig aufgelöst, während die größeren Körner nur gering angeätzt werden. Wird die Reaktionszeit entsprechend gewählt, wird die Fraktion der kleinsten Körner vollständig aufgelöst und damit aus dem Mahlgut entfernt. Es kann dadurch eine gewünschte Korngrößenverteilung und ein gewünschter Trennschnitt realisiert werden. Auf diese Weise kann für die Halbleiter-Herstellung oder für die Solarzellen-Fertigung gröberes Silizium-Mahlgut mit einem extrem geringen Feinstkorn-Anteil gewonnen werden.

Es kann vorteilhafterweise vorgesehen sein, dass die Menge der zugegebenen Base so gewählt ist, dass die Ätzung durch die Base nach ihrem vollständigen Verbrauch beendet wird.

Die Reaktion kann durch Zugabe größerer Mengen Wasser (Verdünnen) oder, was effektiver ist, durch Zugabe von Säure bis zum Neutralpunkt (Neutralisation) oder bis in den sauren Bereich abgebrochen werden. Hierbei ist zu beobachten, dass die verbleibenden Partikel unabhängig von ihrer Größe sehr schnell sedimentieren, und dass die über dem Sediment stehende Lösung klar und frei von kleinsten Siliziumpartikeln, z. B. mit Korngrößen unterhalb von 1 µm, ist. Wichtig ist: Der abgesetzte Feststoff kann durch Rühren leicht wieder suspendiert werden, um gefördert zu werden oder um einen anderen Vorgang herbeizuführen.

Für das Verfahren macht man sich folgende Tatsache zunutze: In einer Suspension des Silizium-Mahlguts weisen Körner größer als etwa 0,25 µm eine schwarze Farbe auf. Silizium-Material mit einer Korngröße gleich oder unter etwa 0,25 µm weist dagegen eine braune Farbe auf. Gemäß einer bevorzugten Weiterbildung ist daher vorgesehen, dass das Ende des Ätzvorgangs durch Bestimmung der Farbe, vorzugsweise durch Bestimmung der Durchsichtigkeit oder Klarheit, ermittelt oder eingeleitet wird.

Weitere vorteilhafte Ausgestaltungen des Verfahrens, die insbesondere auch für eine industrielle Anwendung geeignet sind, sind in den Unteransprüchen beschrieben.

Die genannte Aufgabe bezüglich der Verwendung einer Einrichtung zur Durchführung des Verfahrens wird erfindungsgemäß dadurch gelöst,
a) dass an einen Reaktionsbehälter
   a1) ein Vorratsbehälter für das Silizium-Mahlgut,
   a2) ein Vorratsbehälter für eine Base (z. B. NaOH, KOH) oder aber eine wässrige oder wasserenthaltende Lösung einer Base (z. B. NaOH, KOH)
      und
   a3) ein Vorratsbehälter für eine Säure (z. B. HCl)
   angeschlossen sind,
b) dass das Silizium-Mahlgut, die Base (NaOH, KOH) oder die Lösung der Base (NaOH, KOH) sowie die Säure (z. B. HCl) dem Reaktionsbehälter steuerbar zuführbar sind,
c) dass ein Gerät zur Verwirbelung des Inhalts des Reaktionsbehälters vorgesehen ist,
d) dass zur Unterbrechung der Zufuhr der Säure (z. B. HCl) in den Reaktionsbehälter eine Einrichtung vorgesehen ist, die die Unterbrechung
   - entweder zu einem an einen Zeitgeber vorgewählten Zeitpunkt
   - oder zu einem mit einem Messgerät ermittelten Zeitpunkt vornimmt,
e) dass am Reaktionsbehälter eine Entnahmevorrichtung für die sedimentierte Fraktion angebracht ist, und
f) dass am Reaktionsbehälter eine Entnahmevorrichtung für die oberhalb der sedimentierten Fraktion befindliche Flüssigkeit angeordnet ist.

Statt der Unterbrechung mittels Einleitung der Säure aus dem Säure-Vorratsbehälter und Neutralisation kann auch eine Unterbrechung durch ein Verdünnen mittels Einleitung von Wasser aus einem Wasser-Vorratsbehälter stattfinden.

Hier kann insbesondere ein Gerät zum Messen der Klarheit der im Reaktionsbehälter vorhandenen Suspension vorgesehen sein. Zeigt dieses Gerät "Klarheit" oder "Durchsichtigkeit" der Suspension an, ist der Ätzprozess beendet, und weitere Schritte (z. B. Abziehen der sedimentierten Fraktion und/oder der darüber stehenden Flüssigkeit) können folgen.

Von Wichtigkeit ist es, dass eine Sicherheitseinrichtung vorgesehen ist, die den Anstieg der im Reaktionsbehälter gebildeten aufgeschäumten Suspension über eine maximal zulässige Steighöhe verhindert.

Es war erwähnt worden, dass beim Aufschäumen Wasserstoff entsteht. Dieser sollte mit der gebotenen Vorsicht aus dem Reaktionsbehälter über einen Ablass ablassbar sein.

Bei der Einrichtung sollte auch zur Steuerung des Zulaufs des Silizium-Mahlguts, der Base oder Lösung der Base (z. B. NaOH, KOH) und/oder der Säure (z. B. HCl) jeweils ein steuerbares Ventil vorgesehen sein.

Weitere vorteilhafte Ausgestaltungen sind in den Unteransprüchen beschrieben.

Es sei auch noch erwähnt, dass In der Halbleiterindustrie, insbesondere auch bei der Solarzellen-Herstellung, Silizium-Material mit geringer Partikelgröße (unter etwa 1 µm) prinzipiell unerwünscht ist. Vielmehr wird feinststaubfreies Material mit größerer Partikelgröße in der Photovoltaik verwendet. Ein solch gröberes Material lässt sich kostengünstig mit der angegebenen Methodik und der angegebenen Einrichtung aus dem gängigen, kömigen Silizium-Material oder aus dem erwähnten Silizium-Abfall, der bei der Si-Bearbeitung entsteht, herstellen, was als ein erheblicher Vorteil angesehen wird.

Ausführungsbeispiele der Erfindung werden im folgenden anhand von 6 Figuren näher beschrieben. Es zeigen
- Fig. 1 bis 5: den Inhalt eines Gefäßes, nachdem verschiedene Prozesshandlungen vollzogen wurden, und
- Fig. 6: eine Einrichtung zum Entfernen von Feinst-Siliziumpartikeln aus einem körnigen Silizium-Mahlgut.

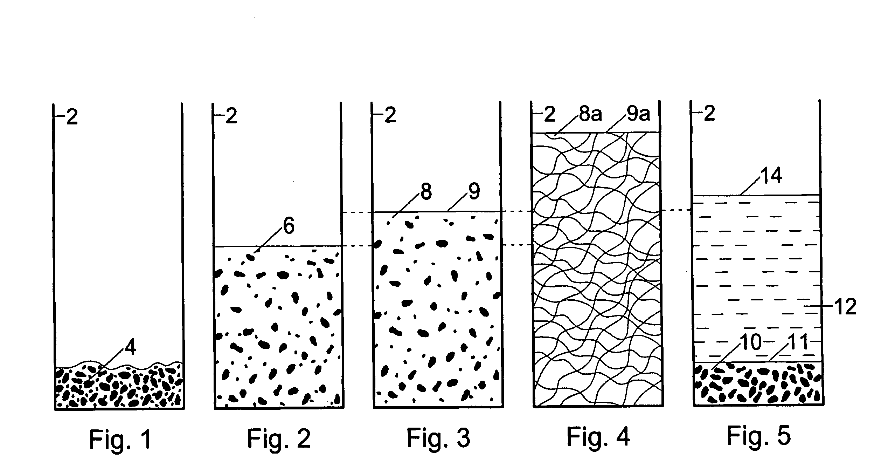

In den Figuren 1 bis 5 ist das Verfahren nach der Erfindung an einem Ausführungsbeispiel im Prinzlp dargestellt. Es handelt sich hier speziell um eine im Labor erfolgreiche Vorgehensweise, die auch in einer kommerziellen Anlage realisiert werden kann.

Nach Fig. 1 wird in ein Gefäß 2 in einem ersten Schritt körniges Silizium-Mahlgut 4 gegeben. Dabei handelt es sich um 3 kg mechanisch gemahlenes, z. B. kommerziell erhältliches Silizium einer Korngrößefraktion mit einer Korngröße kleiner als 50 µm. Der hier verwendete Durchmesser des Gefäßes 2 beträgt ca. 20 cm. Das Silizium-Mahlgut 4 enthält einen Anteil von ca. 5 Masseprozent an feinteiligem Silizium mit Teilchengrößen unter 0,25 µm. Es ist also festzuhalten, dass sich im Gefäß 2 gemäß Fig. 1 nun festes Silizium-Mahlgut 4 mit einem "Feinanteil" und einem "Grobanteil" befindet. Der Feinanteil soll beseitigt werden, ohne dass ein nennenswerter Silizium-Verlust im Grobanteil auftritt.

Das Silizium-Mahlgut 4 wird nun in einem zweiten Schritt mit ca. 2,3 I deionisiertem Wasser H₂O versetzt und durch Rühren suspendiert. Die Suspension 6 ist in Fig. 2 gezeigt. Sie hat eine braune Farbe, die durch den Feinanteil des Silizium-Mahlguts 4 gegeben ist, insbesondere durch einen Anteil mit einer Korngröße von weniger als 0,25 µm.

Unmittelbar danach wird in einem dritten Schritt eine Lauge, speziell hier ca. 0,2 I einer NaOH-Lösung mit 4,4 Masseprozent, zugegeben. Und das Silizium wird durch Rühren weiter suspendiert. Die Suspension ist jetzt mit 8 bezeichnet. Die so resultierende Laugekonzentration betrug im gewählten Ausführungsbeispiel ca. 0,05 Masseprozent.

Es soll hervorgehoben werden, dass der zweite und dritte Schritt auch zusammengefasst werden können.

In dieser Suspension 8 entsteht sofort eine chemische Reaktion, die sich durch Wärmeentwicklung, durch Blasenbildung und durch ein erhebliches Aufschäumen äußert. Das Resultat des Aufschäumens ist in Fig. 4 dargestellt. Das aufgeschäumte Produkt ist mit 8a bezeichnet. Es füllt nun fast das gesamte Gefäß 2. Hier ist klar ersichtlich, dass die Oberfläche 9a ganz erheblich über der Oberfläche 9 von Fig. 3 liegt, wo die Höhe dieser Oberfläche 9 durch die Summe der Volumina von Si, H₂O und NaOH bestimmt ist. Der Anstieg der Oberfläche 9a über die Höhe der Oberfläche 9 kann, je nach Laugenkonzentration und Gefäßdimensionierung, z. B. 3 - 4 cm oder wesentlich mehr betragen, z. B.ca. 20 cm.

Während des Aufschäumprozesses erfolgt zweckmäßigerweise ein kontinuierliches Rühren, um ein Überschäumen der aufgeschäumten Suspension 8a zu vermeiden. Es können auch andere Sicherungsmaßnahmen getroffen sein, um sicherzustellen, dass ein maximal hoher Spiegel 9a nicht überschritten wird.

Während des Aufschäumens gemäß Fig. 4 findet ein Ätzvorgang statt. Er wird hier ca. eine Stunde lang aufrechterhalten. Er löst das Feinmaterial praktisch vollständig auf, also bevorzugt die Siliziumteilchen mit einer Korngröße unter 0,25 µm. Das starke Aufschäumen ist hier also von erheblicher Bedeutung für die Herstellung des gewünschten Grobmaterials, das weitestgehend frei ist von Feinmaterial, insbesondere von Silizium-Material einer Korngröße von unter etwa 0,25 µm bis 1 µm. Durch das Aufschäumen wird eine Verwirbelung der Partikel bewirkt. Damit wird der chemische Angriff auf die einzelnen Partikel erhöht.

Danach wird in einem vierten Schritt die aufgeschäumte Lösung 8a durch die Zugabe von Säure, hier speziell durch die Zugabe von ca. 40 ml Salzsäure HCl mit Masseprozentzahl 36, neutralisiert. Dadurch wird der Ätzvorgang gestoppt. Alternativ könnte auch viel Wasser H₂O beigegeben werden. Der Schaum 8a bildet sich zurück, und das noch verbliebene gröbere Mahlgut 10 sedimentiert innerhalb weniger Minuten komplett. Dies ist in Fig. 5 gezeigt. Über dem abgesetzten (sedimentierten) grobkörnigen Mahlgut 10 oberhalb einer Grenzlinie 11 bildet sich dabei eine klare (nicht-braune) Flüssigkeit oder Lösung 12. In dieser klaren Lösung 12 ist das zuvor gemäß Fig. 1 vorhandene feinkörnige Mahlgut gelöst. Die Oberfläche 14 der Flüssigkeit 10 liegt einiges unter der Oberfläche 9a des aufgeschäumten Mahlguts 8a.

Die klare Lösung 12 kann nun nahezu partikelfrei abgetrennt aus dem Gefäß 2 entnommen werden.
Das abgesetzte grobkörnige Silizium 10 kann nun ebenfalls aus dem Gefäß 2 entnommen und entweder a) erneut nach den erwähnten Schritten 1 bis 4 behandelt oder b) einer weiteren Verarbeitung, z. B. Waschen, Aufnehmen, Trocknen, zugeführt werden. Wie gesagt, das grobkörnige Silizium-Material 10 ist z. B. für die Halbleiter- und Solarzellen-Fertigung von großer Bedeutung.

Bei dem voran stehend geschilderten Prozess-Beispiel wurde folgendes beobachtet: Gibt man eine Probe des abgesetzten Mahlguts 10 auf einen feinporigen Filter (Porendurchmesser kleiner als 1 µm) und gibt man dann Wasser auf diese Probe, so beobachtet man in der durchlaufenden Waschlösung keine braunen Auswaschungen. Es tritt auch kein Verstopfen des feinporigen Filters ein.

Es wurde auch beobachtet, dass eine erneute Suspendierung dieses abgetrennten grobkörnigen Anteils 10 in Wasser (entsprechend Fig. 2) oder in einem sauren Medium auch nach vielen Stunden keinen Farbumschlag ins Braune mehr zeigt. Vielmehr sedimentiert dieses verbliebene Silizium 10 mit einer klaren Grenze oder Trennlinie, so dass eine weitgehend klare Lösung im oberen Bereich zurückbleibt. An der (nicht-braunen) Farbe ist erkennbar, dass der Feinanteil des Siliziums - wie gewünscht - komplett entfernt wurde.

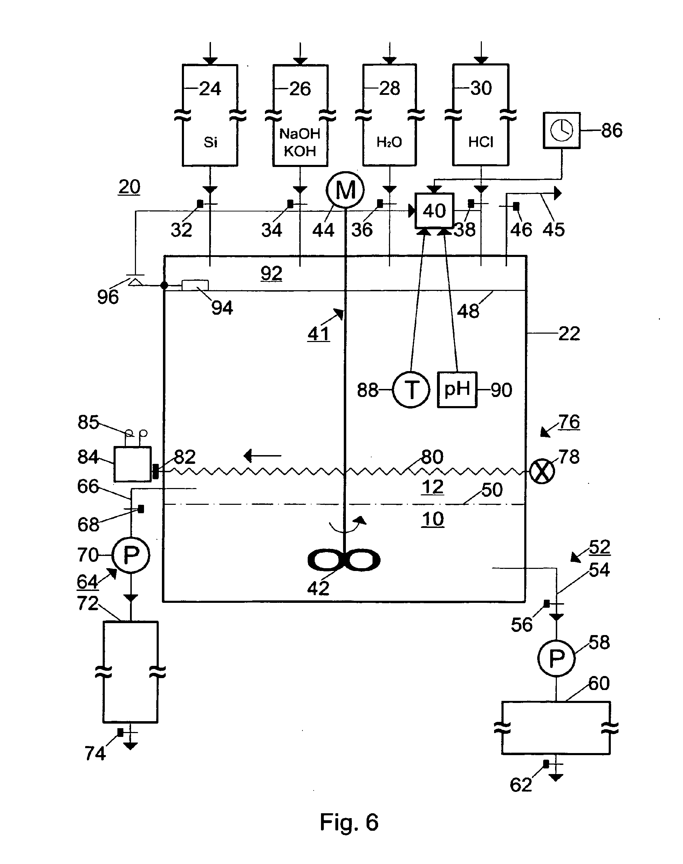

In Fig. 6 ist eine Einrichtung 20 zur Entfernung von Feinst-Siliziumpartikeln aus körnigem Silizium-Mahlgut 4 dargestellt. Diese Einrichtung 20 lehnt sich an die anhand der Fig. 1 bis 5 geschilderte Vorgehensweise an.

Kernstück der Anlage 20 ist ein Reaktionsbehälter 22, an den Vorratsbehälter 24, 26, 28 und 30 für trockenes Silizium-Mahlgut Si, Natron- oder Kalilauge NaOh bzw. KOH, Wasser H₂O bzw. eine Säure, wie z. B. Salzsäure HCl, angeschlossen sind. In den Zuleitungen zwischen den Vorratsbehältern 24, 26, 28, 30 und dem Reaktionsbehälter 22 liegen steuerbare Zulaufreduzier- oder Sperreinrichtungen 32, 34, 36 bzw. 38, die als Drossel- oder Sperrventile eingezeichnet sind. Diese Sperreinrichtungen 32 bis 38 sind von Hand oder ggf. auch elektrisch betätigbar und dienen der Steuerung des jeweiligen Zulaufs in den Reaktionsbehälter 22. Die beiden Vorratsbehälter 26, 28 können dabei zu einem einzigen Vorratsbehälter (nicht gezeigt) zusammengefasst sein, der mit Wasser verdünnte Base aufnimmt.

Das Silizium-Mahlgut 4 enthält auch hier wieder einen nennenswerten (erheblichen) Anteil an Silizium-Staub mit einer Partikel-Korngröße von etwa 0,25 µm oder darunter.

Den einzelnen Sperreinrichtungen 32 bis 38 kann jeweils oder gemeinsam eine Steuereinrichtung zugeordnet sein. Eine solche Steuereinrichtung 40 ist an der Sperreinrichtung 38 für die vom Vorratsbehälter 30 abgegebene Säure eingezeichnet.

Zum Rühren des Inhalts des Reaktionsbehälters 22 ist hier etwa zentral ein Gerät 41 zur Verwirbelung vorgesehen. Vorliegend wird speziell eine Rühreinrichtung mit einer Schaufel 42 verwendet, die mit Hilfe eines Elektromotors 44 gedreht wird. Prinzipiell kann natürlich auch ein anderes Gerät 41 zur Verwirbelung verwendet werden, z. B. ein elektrisch-induktiv arbeitendes Gerät.

Am oberen Ende des Reaktionsbehälters 22 befindet sich ein Auslaß 45 mit Absperrventil 46. Hier kann der bei der Reaktion entstehende Wasserstoff H₂ gezielt abgelassen werden.

Im Behälter 22 ist hier der oberste Spiegel der Steighöhe mit 48 bezeichnet. Dieser Spiegel 48 liegt erheblich, z. B. bis zu 100 %, über der Höhe des Spiegels, der gemäß Fig. 4 der Summe der nicht-aufgeschäumten Volumina von Si, H₂0 und NaOH entspricht. Es sind Sicherheitsmaßnahmen getroffen, dass diese oberste Steighöhe 48 beim Aufschäumen nicht überstiegen wird. Und die Grenze der Sedimentation, die gemäß Fig. 5 das abgesetzte grobkörnige Silizium 10 von der darüber stehenden klaren Flüssigkeit 12 trennt, ist hier mit 50 bezeichnet.

Zum Austragen der für die Weiterverarbeitung gewünschten groben Fraktion 10 (die z. B. für die Silizium-Scheiben-Herstellung auf dem Gebiet der Halbleiter-Technik eingesetzt wird) ist eine Entnahmevorrichtung 52 am unteren Ende des Vorratsbehälters 22 angeordnet. Diese ist hier als Entnahmeleitung 54 mit Absperrventil 56 und Fördereinrichtung oder Pumpe 58 gezeigt. Natürlich kann auch jede andere Art von Entnahmevorrichtung 52 für das grobkörnige Gut 10 eingesetzt werden. Es soll betont werden, dass die Partikel der groben Fraktion 10 kaum an einander kleben oder sich gar am Grunde des Reaktionsbehälters 22 praktisch unlösbar festsetzen. Die Entnahmevorrichtung 52 leitet das grobkörnige Mahlgut 10 bedarfsgerecht an einen Behälter und/oder an eine Wasch- und/oder Trockeneinrichtung 60 weiter. Hieraus kann das Gut 10 dann über ein Sperrventil 62 z. B. an einen (nicht gezeigten) Aufnahmebehälter weitergeleitet werden.

Korrespondierend ist zum Austragen der klaren Flüssigkeit 12 die Entnahmevorrichtung 64 vorgesehen. Diese ist hier ebenfalls als Entnahmeleitung 66 mit Absperrventil 68 und Fördereinrichtung oder Pumpe 70 eingezeichnet. Diese Entnahmevorrichtung 64 leitet die klare Flüssigkeit 12 (die gelöst das feinkörnige Silizium-Mahlgut enthält) gemäß der gestellten Anforderung an einen Auffangbehälter 72. Von hier aus kann die Flüssigkeit 12 dann über ein Ablass- oder Absperrventil 74 beispielsweise entsorgt oder einer Aufbereitungseinrichtung zugeführt werden.

Von Bedeutung für die Funktion der Einrichtung 20 kann auch ein Gerät 76 zur Messung der Klarheit des oberen Teils der aufgeschäumten Suspension 8a (vergl.
Fig. 4) nach dem Einleiten der Säure aus dem Vorratsbehälter 30 sein. Mit Hilfe dieses Geräts 76 kann bestimmt werden, wann die Sedimentation der grobkörnigen Fraktion 10 beendet ist und wann diese Fraktion 10 und die oberhalb der Grenze 50 stehende Flüssigkeit 12 ausgetragen werden können. Vorliegend besteht das Gerät 76 aus einer Lichtquelle 78, die Licht 80 knapp oberhalb der zu erwartenden Grenze 50 durch die Flüssigkeit 12 hindurch nach Durchgang durch ein Filter 82 auf einen Lichtdetektor 84 strahlt. An dessen Ausgangsklemmen 85 wird bei ausreichender Klarheit z. B. an die Steuereinheit 40 ein Signal abgegeben, dass die Säurezufuhr aus dem Vorratsbehälter 30 unterbricht oder reduziert.

Statt dieses speziellen Geräts 76 kann auch ein solches eingesetzt werden, das das Erreichen der gewünschten Korngrößenverteilung im Reaktionsbehälter 22 anzeigt. Es kann also z. B. auch ein Gerät zur on-line-Überwachung der mittleren Korngröße eingesetzt werden, was allerdings mit einigem Aufwand verbunden ist.

Sind in dem vorgenommenen Prozess die Parameter bekannt, so kann zum Unterbrechen der Säurezufuhr auch eine Uhr oder ein einstellbarer Zeitgeber 86 verwendet werden, der nach Ablauf einer vorgegebenen Zeitspanne, z. B. - je nach Vorgang - von 30 oder 60 Minuten, die Säurezufuhr über die Steuereinheit 40 unterbricht oder reduziert. Stattdessen kann - gesteuert durch den Zeitgeber 86 - auch Wasser H₂0 zwecks Unterbrechung der Ätzung durch die Base NaOH oder KOH in den Vorratsbehälter 22 eingeleitet werden (Verdünnen).

Zur Bestimmung für den Zeitpunkt der Unterbrechung oder Reduzierung kann auch der von einem Temperaturmesser 88 gemessene Temperaturmeßwert T oder der von einem pH-Wert-Meßgeber 90 gemessene pH-Meßwert pH herangezogen werden. Temperatur T und pH-Wert pH sind Indikatoren für den Zustand der Suspension. Die Säurezufuhr kann, je nach Wunsch und Einstellung, dann unterbrochen werden, wenn der pH-Meßwert "neutral" oder gar "sauer" anzeigt.

Vorliegend ist noch eine Sicherheitseinrichtung 92 im oberen Teil des Reaktionsbehälters 72 angeordnet, die dafür sorgt, dass ein zu starkes Aufschäumen und damit ein Übersteigen der vorgegebenen obersten Steighöhe 48 vermieden wird. Im in Fig. 6 gezeigten Fall handelt es sich speziell um einen Füllstandmesser mit einem Schwimmer 94, der eine elektrische Kontaktstrecke 96 unterbricht, sobald der Schwimmer 94 in Höhe der obersten Steighöhe 48 auf der aufgeschäumten Suspension 8a aufschwimmt. Diese Unterbrechung wirkt elektrisch mittels einer Steuerleitung auf die Steuereinrichtung 40 ein.

Der große Vorteil der dargestellten Einrichtung 20 besteht darin, dass sich mit ihr auf relativ kostengünstige Weise die unerwünschten, sehr kleinen Partikel aus einem Silizium-Mahlgut sehr effektiv abtrennen und entfernen lassen, und dass die für eine Verarbeitung (z. B. in der Halbleiter-Industrie, insbesondere als Rohmaterial für die Solarzellenherstellung) gewünschten, immer noch kleinen, aber relativ etwas größeren Partikel (z. B. ab 1 µm) in weiter verarbeitbarer Weise und ohne feinsten Silizium-Staub gewonnen werden. Die eingangs geschilderten Nachteile für die Gestaltung eines technischen Prozesses oder gar für die Gesundheit sind beseitigt.

Zusammenfassend kann gesagt werden: Das hier beschriebene Verfahren und die Einrichtung zur Durchführung des Verfahrens sind ganz gezielt auf die chemische Zersetzung der Silizium-Feinstpartikel mit einer Korngröße von 1 µm und darunter
-- mittels der wässrigen oder wasserenthaltenden Lösung der Base (z. B. NaOH oder KOH)
-- unter heftiger Schaumbildung
-- infolge der speziell ausgesuchten Verwendung des braun-suspendierenden Silizium-Materials
abgestimmt.

### Bezugszeichenliste:

- 2: Gefäß
- 4: Silizium-Mahlgut
- 6: Suspension
- 8: Suspension nach Zugabe der Lauge (NaOH, KOH)
- 8a: aufgeschäumte Suspension
- 9: Höhe der Oberfläche der Suspension (ohne Aufschäumung)
- 9a: Höhe der aufgeschäumten Oberfläche
- 10: sedimentiertes Mahlgut
- 11: Grenzlinie zwischen sedimentiertem Mahlgut und verbleibender Lösung
- 12: klare Lösung
- 14: Oberfläche der Lösung
- 20: Einrichtung zum Entfernen von Si-Feinstpartikeln
- 22: Reaktionsbehälter
- 24: Vorratsbehälter NaOH
- 26: Vorratsbehälter KOH
- 28: Vorratsbehälter H₂O
- 30: Vorratsbehälter HCl
- 32: Sperreinrichtung
- 34: Sperreinrichtung
- 36: Sperreinrichtung
- 38: Sperreinrichtung
- 40: Steuereinrichtung
- 41: Gerät zur Verwirbelung
- 42: Schaufel
- 44: Elektromotor
- 45: Auslass
- 46: Absperrventil
- 48: oberster Spiegel der Steighöhe der Lösung
- 50: Grenzlinie zwischen Sediment und Lösung
- 52: Entnahmevorrichtung für die grobkörnige Fraktion 10
- 54: Entnahmeleitung

- 56: Absperrventil
- 58: Pumpe
- 60: Wasch- und/oder Trockeneinrichtung
- 62: Sperrventil
- 64: Entnahmevorrichtung für die Flüssigkeit 12
- 66: Entnahmeleitung
- 68: Absperrventil
- 70: Pumpe
- 72: Auffangbehälter
- 74: Absperrventil
- 76: Meßgerät für das Ende der Sedimentation
- 78: Lichtquelle
- 80: Licht
- 82: Filter
- 84: Lichtdetektor
- 85: Ausgangsklemmen
- 86: Zeitgeber
- 88: Temperaturmesser
- 90: pH-Wert-Messer
- 92: Sicherheitseinrichtung
- 94: Schwimmer
- 96: Kontaktstrecke

- T: Temperatur
- pH: pH-Wert

## Patentansprüche

1. Verfahren zum Entfernen von feinteiligem Siliziummaterial, insbesondere mit Korngrößen kleiner als 1 µm, aus einem Silizium-Mahlgut mit Korngrößen kleiner als 500 µm, **dadurch gekennzeichnet,**
a) **dass** das Silizium-Mahlgut (Si) so ausgewählt wird, dass es bei Zugabe von Wasser in der so gebildeten Suspension eine überwiegend braune Farbe zeigt und somit einen erheblichen Anteil an Silizium-Material der Korngröße unterhalb von 0,25 µm enthält,
b) **dass** das Silizium-Mahlgut (Si) in einem Reaktionsbehälter (2; 22) vorgelegt wird,
c) **dass** dem Silizium-Mahlgut (Si) eine wässrige oder wasserenthaltende Lösung einer Base (NaOH, KOH) zugegeben wird, wodurch ein Ätzvorgang stattfindet, wobei ein erhebliches Aufschäumen erfolgt, und wobei die feine Fraktion mit einer Korngröße kleiner etwa 1 µm chemisch entfernt wird,
d) **dass** die Ätzung durch die Base (NaOH, KOH) mittels Zugabe einer Säure (HCl) oder von Wasser (H₂O) beendet wird, wobei durch die Neutralisierung der Base (NaOH, KOH) mittels der Säure (HCl) ein zügiges Absetzen der gebildeten Suspension eingeleitet wird, und
e) **dass** nach Ende des Ätzvorganges und nach einer sich einstellenden Sedimentierung das abgesetzte relativ grobkörnige Festgut (10) zur weiteren Verarbeitung bereitgestellt und/oder die über dem relativ grobkörnigen Festgut (10) gebildete Lösung (12) abgezogen wird.

2. Verfahren nach Anspruche 1, **dadurch gekennzeichnet, dass** die Menge der zugegebenen Base (NaOH, KOH) so gewählt ist, dass die Ätzung durch die Base (NaOH, KOH) nach ihrem vollständigen Verbrauch beendet wird.

3. Verfahren nach Anspruch 1 oder 2, **dadurch gekennzeichnet, dass** zum Ätzen die Lösung NaOH-H₂O oder KOH-H₂O verwendet wird.

4. Verfahren nach einem der Ansprüche 1 bis 3, **dadurch gekennzeichnet, dass** zur Bildung der Neutralisation bzw. zur Beendigung der Ätzung Salzsäure (HCl) verwendet wird.

5. Verfahren nach einem der Ansprüche 1 bis 4, **dadurch gekennzeichnet, dass** das Ende des Ätzvorgangs durch Bestimmung der Farbe, vorzugsweise durch Bestimmung der Durchsichtigkeit oder Klarheit, ermittelt wird.

6. Verfahren nach einem der Ansprüche 1 bis 5, **dadurch gekennzeichnet, dass** die Ätzzeit so eingestellt ist, dass vorrangig Material der Korngröße unter 0,5 µm, bevorzugt unter 0,1 µm, entfernt wird.

7. Verwendung einer Einrichtung (20) zum Entfernen von feinteiligem Siliziummaterial aus einem Silizium-Mahlgut (Si) mit Korngrößen kleiner als 500 µm, mit
a) an einen Reaktionsbehälter (22) angeschlossen
a1) einem Vorratsbehälter (24) für das Silizium-Mahlgut (Si),
a2) einem Vorratsbehälter (26) für eine Base (NaOH, KOH) oder eine wässrige oder wasserenthaltende Lösung einer Base (NaOH, KOH) und
a3) einem Vorratsbehälter (30) für eine Säure (z. B. HCl)
b) wobei das Silizium-Mahlgut (Si), die Base (NaOH, KOH) bzw. die Lösung der Base (NaOH, KOH) sowie die Säure (z. B. HCl) dem Reaktionsbehälter (22) steuerbar zuführbar sind,
c) wobei ein Gerät (41) zur Verwirbelung des Inhalts des Reaktionsbehälters (22) vorgesehen ist,
d) wobei zur Unterbrechung der Zufuhr der Säure (z. B. HCl) in den Reaktionsbehälter (22) eine Einrichtung (40, 86, 88, 90) vorgesehen ist, welche die Unterbrechung
- entweder zu einem an einen Zeitgeber (86) vorgewählten Zeitpunkt
- oder zu einem mit einem Messgerät (88, 90) ermittelten Zeitpunkt vornimmt,
e) wobei am Reaktionsbehälter (22) eine Entnahmevorrichtung (52) für die sedimentierte Fraktion (10) angebracht ist, und
f) wobei am Reaktionsbehälter (22) eine Entnahmevorrichtung (64) für die oberhalb der sedimentierten Fraktion (10) befindliche Flüssigkeit (12) angeordnet ist,
zur Durchführung des Verfahrens nach einem der Ansprüche 1 bis 6.

8. Verwendung einer Einrichtung (20) nach Anspruch 7, **dadurch gekennzeichnet, dass** ein Gerät (76) zum Messen der Klarheit der im Reaktionsbehälter (22) vorhandenen Suspension vorgesehen ist.

9. Verwendung einer Einrichtung (20) nach Anspruch 7 oder 8, dadurch gekennzeichet, dass eine Sicherheitseinrichtung (40, 76, 94, 96; 40, 86) vorgesehen ist, die den Anstieg der im Reaktionsbehälter (22) gebildeten aufgeschäumten Suspension (8a) über eine maximal zulässige Steighöhe (48) verhindert.

10. Verwendung einer Einrichtung (20) nach einem der Ansprüche 7 bis 9, **dadurch gekennzeichnet, dass** am Reaktionsbehälter (22) ein Auslass (45) für Wasserstoff (H₂) vorgesehen ist.

11. Verwendung einer Einrichtung (20) nach einem der Ansprüche 7 bis 10, **dadurch gekennzeichnet, dass** zur Steuerung des Zulaufs des Silizium-Mahlguts (Si), der Base oder Lösung der Base (NaOH, KOH) und/oder der Säure (HCl) jeweils ein steuerbares Ventil (32, 34, 36 und/oder 38) vorgesehen ist.

12. Verwendung einer Einrichtung (20) nach einem der Ansprüche 8 bis 11, **dadurch gekennzeichnet, dass** das Gerät (76) zum Messen der Klarheit eine Lichtquelle (78) und einen Lichtdetektor (84) umfasst.

13. Verwendung einer Einrichtung (20) nach einem der Ansprüche 7 bis 12, **dadurch gekennzeichnet, dass** das Messgerät (88, 90) zur Beendigung der Zufuhr der Säure (HCl) einen Temperatur-Meßgeber (88) oder einen ph-Wert-Meßgeber (90) umfasst.

14. Verwendung einer Einrichtung (20) nach einem der Ansprüche 7 bis 13, **dadurch gekennzeichnet, dass** an die Entnahmevorrichtung (52) für die sedimentierte Fraktion (10) eine Wasch- oder Trockeneinrichtung (60) angeschlossen ist.

15. Verwendung einer Einrichtung nach einem der Ansprüche 7 bis 14, **dadurch gekennzeichnet, dass** an die Entnahmevorrichtung (64) für die Flüssigkeit (12) ein Auffangbehälter (72) angeschlossen Ist.

16. Verwendung einer Einrichtung (20) nach einem der Ansprüche 7 bis 15, **dadurch gekennzeichnet, dass** das Gerät (41) zur Verwirbelung eine an einen Elektromotor (44) angeschlossene Schaufel (42) umfasst.

17. Verwendung einer Einrichtung (20) nach einem der Ansprüche 7 bis 16, **dadurch gekennzeichnet, dass** die Sicherheitseinrichtung (76) einen auf der Oberfläche (9a) der Suspension (8a) schwimmenden Schwimmer (94) oder einen Zeitgeber (86) umfasst.

18. Verwendung einer Einrichtung (20) nach einem der Ansprüche 7 bis 17, **dadurch gekennzeichnet, dass** das Silizium-Mahlgut (Si) sowie die Konzentration und Menge der wässrigen bzw. wasserenthaltenden Lösung der Base (NaOH, KOH) beim Einleiten in den Reaktionsbehälter (22) so gewählt sind, dass die Steighöhe der aufgeschäumten Suspension (8a) über der Oberfläche (9) von nicht-aufgeschäumter Suspension (6) plus Base (NaOH, KOH) mindestens 1 bis 3 cm beträgt.

19. Verwendung einer Einrichtung (20) nach Anspruch 18, **dadurch gekennzeichnet, dass** die Steighöhe über 10 cm beträgt.

## Claims

1. Method for the removal of fine silicon material, in particular with grain sizes below 1µm, from silicon material to be ground with grain sizes up to 500µm, **characterized in that**
a) the silicon material to be ground (Si) is selected in such a way that its slurry has a mainly brown color if water is added, i.e. contains a significant part of silicon material with a grain size below 0.25µm,
b) the silicon material to be ground (Si) is contained in a reaction vessel (2; 22),
c) an aqueous or water-containing solution of a base (NaOH, KOH) is added to the silicon material to be ground (Si), which causes an etching process which leads to significant foaming and thereby chemically removes the fine particle fraction with a grain size below ca. 1 µm,
d) the etching process caused by the base (NaOH, KOH) is stopped by adding an acid (HCl) or water (H₂0) and that by neutralizing the base (NaOH, KOH) with the acid (HCl) quick sedimentation of the slurry begins, and
e) when the etching process is finished and the sedimentation begins, the rather coarse solid material (10) is provided for further processing and/or the solution (12) formed above the rather coarse solid material (10) is withdrawn.

2. Method according to Claim 1, **characterized in that** the amount of the added base (NaOH, KOH) is such that the etching process caused by the base (NaOH, KOH) is finished when it is completely used up.

3. Method according to Claim 1 or 2, **characterized in that** the solution NaOH-H₂O or KOH-H₂O is used for etching.

4. Method according to any one of Claims 1 to 3, **characterized in that** hydrochloric acid (HCl) is used for neutralization and/or to stop the etching process.

5. Method according to any one of Claims 1 to 4, **characterized in that** the end of the etching process is determined by the color, preferably by transparency or clarity.

6. Method according to any one of Claims 1 to 5, **characterized in that** the etching time is set in such a way that mainly material with a grain size below 0.5µm, preferably below 0.1µm, is removed.

7. Use of equipment (20) for the removal of fine silicon material from silicon material to be ground (Si) with grain sizes up to 500µm with
a) connected to a reaction vessel (22)
a1) a storage vessel (24) for the silicon material to be ground (Si),
a2) a storage vessel (26) for a base (NaOH, KOH) or an aqueous or water-containing solution of a base (NaOH, KOH) and
a3) a storage vessel (30) for an acid (e.g. HCl)
b) where the silicon material to be ground (Si), the base (NaOH, KOH) or the solution of the base (NaOH, KOH) and the acid (e.g. HCl) can be fed to the reaction vessel (22) in a controlled manner,
c) where a device (41) is provided that agitates the content of the reaction vessel (22),
d) where equipment (40, 86, 88, 90) is provided that interrupts the supply of the acid (e.g. HCl) to the reaction vessel (22)
- either at a time preset at a timer (86)
- or at a time determined with a measuring device (88, 90),
e) where the reaction vessel (22) is equipped with a removal device (52) for the deposited fraction (10), and
f) where the reaction vessel (22) is equipped with a removal device (64) for the fluid (12) above the deposited fraction (10),
to carry out the method according to any one of Claims 1 to 6.

8. Use of equipment (20) according to Claim 7, **characterized in that** a device (76) is provided that measures the clarity of the slurry in the reaction vessel (22).

9. Use of equipment (20) according to Claim 7 or 8, **characterized in that** a safety device (40, 76, 94, 96; 40, 86) is provided that prevents the foamed slurry (8a) formed in the reaction vessel (22) from rising above a maximum permissible rising height (48).

10. Use of equipment (20) according to any one of Claims 7 to 9, **characterized in that** the reaction vessel (22) is equipped with an outlet (45) for hydrogen (H₂).

11. Use of equipment (20) according to any one of Claims 7 to 10, **characterized in that** a controllable valve (32, 34, 36 and/or 38) each is provided to control the supply of the silicon material to be ground (Si), the base or solution of the base (NaOH, KOH) and/or the acid (HCl).

12. Use of equipment (20) according to any one of Claims 8 to 11, **characterized in that** the device (76) used to measure the clarity contains a light source (78) and a light detector (84).

13. Use of equipment (20) according to any one of Claims 7 to 12, **characterized in that** the measuring device (88, 90) used to stop the acid (HCl) supply contains a temperature sensor (88) or a pH value sensor (90).

14. Use of equipment (20) according to any one of Claims 7 to 13, **characterized in that** the removal device (52) for the deposited fraction (10) is connected to a washing or drying device (60).

15. Use of equipment according to any one of Claims 7 to 14, **characterized in that** the removal device (64) for the fluid (12) is connected to a collecting vessel (72).

16. Use of equipment (20) according to any one of Claims 7 to 15, **characterized in that** the agitation device (41) contains a paddle (42) connected to an electric motor (44).

17. Use of equipment (20) according to any one of Claims 7 to 16, **characterized in that** the safety device (76) contains a floater (94) floating on the surface (9a) of the slurry (8a) or a timer (86).

18. Use of equipment (20) according to any one of Claims 7 to 17, **characterized in that** the silicon material to be ground (Si) and the concentration and amount of the aqueous or water-containing solution of the base (NaOH, KOH) fed into the reaction vessel (22) is such that the rising height of the foamed slurry (8a) above the surface (9) of the non-foamed slurry (6) plus base (NaOH, KOH) is at least 1 cm to 3cm.

19. Use of equipment (20) according to Claim 18, **characterized in that** the rising height exceeds 10cm.

## Revendications

1. Procédé d'élimination des particules fines de silicium, en particulier avec des granulosités inférieures à 1 µm, de silicium broyé avec des granulosités inférieures à 500 µm, **caractérisé en ce**
a) **que** le silicium broyé (Si) est sélectionné de sorte à donner une couleur majoritairement marron une fois que de l'eau a été ajoutée à la suspension ainsi formée et à contenir donc une proportion considérable de silicium avec une granulosité inférieure à 0,25 µm,
b) **que** le silicium broyé (Si) est présenté dans une cuve de réaction (2 ; 22),
c) **qu'**une solution aqueuse d'une base ou une solution d'une base contenant de l'eau (NaOH, KOH) est ajoutée au silicium broyé (Si), ce qui entraîne un processus de gravure qui engendre une grande quantité de mousse et élimine chimiquement la fraction fine avec une granulosité inférieure à environ 1 µm,
d) **que** la gravure par la base (NaOH, KOH) prend fin en ajoutant un acide (HCl) ou de l'eau (H₂O), ce qui entraîne le démarrage d'une sédimentation rapide de la suspension formée par la neutralisation de la base (NaOH, KOH) à l'aide de l'acide (HCl), et
e) **que** la matière solide relativement grossière sédimentée (10) est préparée pour un traitement ultérieur et/ou que la solution formée (12) par la matière solide relativement grossière (10) est éliminée une fois le processus de gravure terminé et après une sédimentation provoquée.

2. Procédé selon la revendication 1, **caractérisé en ce que** la quantité de base ajoutée (NaOH, KOH) est sélectionnée de sorte à ce que la gravure par la base (NaOH, KOH) soit terminée après consommation complète.

3. Procédé selon la revendication 1 ou 2, **caractérisé en ce que** la solution NaOH-H₂O ou KOH-H₂O est utilisée pour la gravure.

4. Procédé selon l'une des revendications 1 à 3, **caractérisé en ce que** l'acide chlorhydrique (HCl) est utilisé pour entraîner la neutralisation ou la fin de la gravure.

5. Procédé selon l'une des revendications 1 à 4, **caractérisé en ce que** la fin du processus de gravure est établie par la détermination de la couleur, de préférence par la détermination de la transparence ou de la clarté.

6. Procédé selon l'une des revendications 1 à 5, **caractérisé en ce que** le temps de gravure est ajusté de sorte à ce que la matière avec une granulosité inférieure à 0,5 µm, de préférence inférieure à 0,1 µm, soit éliminée en priorité.

7. Utilisation d'un équipement (20) pour éliminer les particules fines de silicium du silicium broyé (Si) avec des granulosités inférieures à 500 µm, avec
a) raccordé à une cuve de réaction (22)
a1) un réservoir (24) pour le silicium broyé (Si),
a2) un réservoir (26) pour une base (NaOH, KOH) ou une solution aqueuse d'une base ou une solution d'une base contenant de l'eau (NaOH, KOH) et
a3) un réservoir (30) pour un acide (p. ex. HCl)
b) où le silicium broyé (Si), la base (NaOH, KOH) ou la solution de la base (NaOH, KOH) ainsi que l'acide (p. ex. HCl) peuvent être amenés à la cuve de réaction (22) par pilotage,
c) où un appareil (41) est prévu pour le tourbillonnement du contenu de la cuve de réaction (22),
d) où un équipement (40, 86, 88, 90) est prévu pour l'interruption de l'alimentation en acide (p. ex. HCl) dans la cuve de réaction (22),
- soit qui procède à cette interruption à un moment présélectionné sur un temporisateur (86),
- soit qui procède à cette interruption à un moment défini par un appareil de mesure (88, 90),
e) où un dispositif de prélèvement (52) est posé sur la cuve de réaction (22) pour la fraction sédimentée (10), et
f) où un dispositif de prélèvement (64) est posé sur la cuve de réaction (22) pour le liquide (12) situé au-dessus de la fraction sédimentée (10),
pour l'exécution du procédé selon l'une des revendications 1 à 6.

8. Utilisation d'un équipement (20) selon la revendication 7, **caractérisé en ce qu'**un appareil (76) est prévu pour mesurer la clarté de la suspension présente dans la cuve de réaction (22).

9. Utilisation d'un équipement (20) selon la revendication 7 ou 8, **caractérisé en ce qu'**un dispositif de sécurité (40, 76, 94, 96 ; 40, 86) est prévu qui empêche que la suspension mousseuse (8a) formée dans la cuve de réaction (22) passe au-dessus d'une hauteur d'ascension maximum autorisée (48).

10. Utilisation d'un équipement (20) selon l'une des revendications 7 à 9, **caractérisé en ce qu'**un orifice d'évacuation (45) est prévu pour l'hydrogène (H₂) sur la cuve de réaction (22).

11. Utilisation d'un équipement (20) selon l'une des revendications 7 à 10, **caractérisé en ce qu'**une vanne à commande (32, 34, 36 et/ou 38) est respectivement prévue pour piloter l'alimentation en silicium broyé (Si), base ou solution de la base (NaOH, KOH) et/ou de l'acide (HCl).

12. Utilisation d'un équipement (20) selon l'une des revendications 8 à 11, **caractérisé en ce que** l'appareil (76) pour mesurer la clarté comporte une source de lumière (78) et un photorécepteur (84).

13. Utilisation d'un équipement (20) selon l'une des revendications 7 à 12, **caractérisé en ce que** l'appareil de mesure (88, 90) comporte un indicateur de température (88) ou un indicateur de valeur de pH (90) pour stopper l'alimentation en acide (HCl).

14. Utilisation d'un équipement (20) selon l'une des revendications 7 à 13, **caractérisé en ce qu'**un dispositif de lavage ou de séchage (60) est raccordé au dispositif de prélèvement (52) pour la fraction sédimentée (10).

15. Utilisation d'un équipement selon l'une des revendications 7 à 14, **caractérisé en ce qu'**un collecteur (72) est raccordé au dispositif de prélèvement (64) pour le liquide (12).

16. Utilisation d'un équipement (20) selon l'une des revendications 7 à 15, **caractérisé en ce que** l'appareil (41) de tourbillonnement comporte une pale (42) raccordée à un moteur électrique (44).

17. Utilisation d'un équipement (20) selon l'une des revendications 7 à 16, **caractérisé en ce que** le dispositif de sécurité (76) comporte un flotteur (94) qui surnage à la surface (9a) de la suspension (8a) ou un temporisateur (86).

18. Utilisation d'un équipement (20) selon l'une des revendications 7 à 17, **caractérisé en ce que** le silicium broyé (Si) ainsi que la concentration et la quantité de la solution aqueuse de la base ou la solution de base contenant de l'eau (NaOH, KOH) sont sélectionnés lors de l'introduction dans la cuve de réaction (22) de sorte à ce que la hauteur d'ascension de la suspension mousseuse (8a) au-dessus de la surface (9) de la suspension non-mousseuse (6) plus la base (NaOH, KOH) soit de 1 à 3 cm minimum.

19. Utilisation d'un équipement (20) selon la revendication 18, **caractérisé en ce que** la hauteur d'ascension est supérieure à 10 cm.
